# EUROPÄISCHE PATENTSCHRIFT

(11) **EP 2 030 877 B1**
(45) Veröffentlichungstag und Bekanntmachung des Hinweises auf die Patenterteilung: **10.04.2013**
(21) Anmeldenummer: 08014264.9
(22) Anmeldetag: 11.08.2008
(51) Int. Cl.: B62D 65/02, B62D 31/02, B62D 25/06, B62D 27/02

(54) **Fahrzeuggestell mit Dachelement**
Vehicle frame with roof element
Châssis de véhicule doté d'un élément de toit

(30) Priorität: 30.08.2007 DE 202007012185 U; 22.02.2008 DE 102008010590
(43) Veröffentlichungstag der Anmeldung: 04.03.2009
(73) Patentinhaber: 3A Technology & Management AG, 8212 Neuhausen am Rheinfall (CH)
(72) Erfinder: Von Manitius, Siegmund, 9323 Steinach (DE)
(74) Vertreter: Gernet, Samuel Andreas

(56) Entgegenhaltungen:
- EP-A- 1 495 948
- DE-C1- 3 440 240
- FR-A- 2 887 216
- US-A1- 2003 067 187

## Beschreibung

Die Erfindung betrifft ein Fahrzeuggestell -- insbesondere ein Gestell für einen Autobus -- mit einem Grundgerippe aus Metall sowie einem auf diesem festliegenden, für die Monatage aber modularen Dachelement aus einem anderen Werkstoff, wobei die beiden Komponenten durch Klebeverbindungen aneinander angeschlossen sind, nach dem Oberbegriff des Anspruchs 1.

Ein Fahrgestell nach dem Oberbegriff des Anspruchs 1 ist der EP 1 495 948 A1 der Anmelderin zu entnehmen. Darin wird ein Autobus mit einem Wagenkasten aus einem selbsttragenden Grundgerippe, an und einem mit dem Grundgerippe verbundenen Dachteil beschrieben, wobei die Produktion in modularer Bauweise mit vormontierten festgelegten Innenausbauumfängen erfolgt. Zum Verbinden des aus Stahl bestehenden Grundgerippes mit dem in Hybrid-Leichtbauweise gefertigen Dachteil wird letzteres auf das betriebsbereite und ausgestattete Grundgerippe aufgesetzt. Das Dachteil weist eine Basisstruktur mit Anschlussprofilen und Flächenelementen aus einem gegebenenfalls glasfaserverstärkten Kunststoff oder aus einem ein- oder beidseitig mit Kunststoff- oder Metalldeckschichten beplankten Hartstoffschaumkern auf und ist in einer erweiterten Form mit integrierten Front- und/oder Heckdachkappen ausgestattet. Das Dachteil ist an Randprofilen des Grundgerippes über kombinierte Klebe- und Schraubverbindungen oder Klebe- und Schnappverbindungen festgelegt. Als Klebeverbindung dient eine sogenannte Klebstoffraupe, die zwischen dem Randprofil und einem Dachkantenprofil nahe einem längs angebrachten Abstandhalter angeordnet ist.

Aus der FR 2 887 216 A1 ist eine Dachkonstruktion eines PKW bekannt, wobei grundgerippeseitig eine im Wesentlichen U-förmige Rille vorgesehen ist, in die das Dachelement mit einem endseitigen, L-förmigen Abschnitt eingreift.

Aus der US 2003/067187 A1 ist ein alternatives Fahrzeuggestell bekannt, wobei hier ein erstes, im Wesentlichen gerades Teil senkrecht in eine U-förmige Rinne eingreift.

In Kenntnis dieses Standes der Technik hat sich der Erfinder das Ziel gesetzt, den Zusammenbau der Fahrzeugmodule zu vereinfachen und den Anschluss des Dachteils an das Grundgerippe zu verbessern.

Zur Lösung dieser Aufgabe führt die Lehre des unabhängigen Anspruchs; die Unteransprüche geben günstige Weiterbildungen an. Bei angegebenen Benennungsbereichen sollen auch innerhalb der genannten Grenzen liegende Werte als Grenzwerte offenbart und beliebig einsetzbar sowie bezugnehmbar sein.

Erfindungsgemäß greift eine Komponente mit einem hervorstehenden Formelement in eine entsprechend geformte rinnen- oder nutartige Einformung der anderen Komponente ein; zwischen diesen Teilen wird ein spaltartiger Raum gebildet, der eine entsprechend geformte Schicht als Klebekörper aus der Klebeverbindung enthält, der/die insbesondere um einen Ein- oder Zwei-Komponentenkleber -- bevorzugt aus Polyurethan -- besteht.

Im Rahmen der Erfindung liegt es, dass das hervorstehende Formelement ein auf dem Grundgerippe angeordneter Dachgurt mit einem Dachabschnitt hauben- oder kegelartigen Querschnitts ist, der in Einbaustellung in eine Rinne eines Anschlussprofils des Dachelements einragt; die Wandflächen jenes Dachabschnitts sowie die die Rinne bildenden Wandflächen begrenzen einen Spalt zur Aufnahme jenes Klebekörpers, dessen Querschnitt durch die Spaltform vorgegeben ist.

In einer anderen erfindungsgemäßen Ausgestaltung ist das hervorstehende Formelement ein einem Anschlussprofil des Dachelements zugeordnetes Einsatzprofil mit einem Dachabschnitt, der in Einbaustellung in eine Rinne eines auf dem Grundgerippe angeordneten Dachgurtes einragt; in dieser Ausgestaltung bilden die Wandflächen jenes Dachabschnitts mit den die Rinne begrenzenden Wandflächen einen Spalt zur Aufnahme des Klebekörpers.

Bevorzugt wird dazu eine kegelförmige Querschnittskontur des Spaltes - und damit der diesen begrenzenden Wandflächen. Jedoch ist es auch möglich, stattdessen diese Querschnittskontur/en teilkreisförmig oder eckig zu gestalten.

Bei der strukturellen Anbindung des Dachelementes oder Moduldaches -- aus Aluminium, GFK, Stahl od. dgl. -- an das Grundgerippe wird eine mit letzterem geometrisch formschlüssig verbundene Verbindung eingesetzt, die über eine querschnittlich kegelförmige oder bogenartige Profilform einem dazu passenden Gegenanschluss zugeordnet wird. Die mit dem Grundgerippe geometrisch formschlüssig verbundene sowie verklebte Verbindung ist hinsichtlich einer Krafteinleitung z.B. durch Biegemomente geometrisch so gestaltet, dass über diese Anbindungsgeometrie Zugscher- und Druckkräfte übertragen werden. Auch wird eine Selbstausrichtung der Gerippestruktur über die Steifigkeit der Anbaukomponente mit oder ohne Support und über Abstandhalter in der Fügegeometrie ermöglicht, zudem ein Toleranzausgleich zwischen Grundgerippe und Anschlussdachkomponente ohne aufwendigere Richtarbeiten in der Gerippestruktur. Die mit dem Grundgerippe geometrisch formschlüssig verklebte Verbindung gewährleistet die Kompensation eines Wärmeausdehnungsunterschieds zwischen verschiedenen Materialien der Komponenten.

Die gewählte Form und Festigkeit der Klebegeometrie erlauben die im Stadtbus-/Überlandbusbereich geforderte Übertragung von Überrollkräften.

In einem weiteren Montageausbau des Gesamtbusses mit Schwerlasten am Dach erlaubt die Verbindung auch die Übertragung dieser Kräfte in das Grundgerippe.

Von erfindungsgemäßer Bedeutung sind auch die Klebeeigenschaften in der Form und Verformung der Dachanschlüsse und Rohrbauseitenwände sowie der Fähigkeit zur Schwerlastaufnahme.

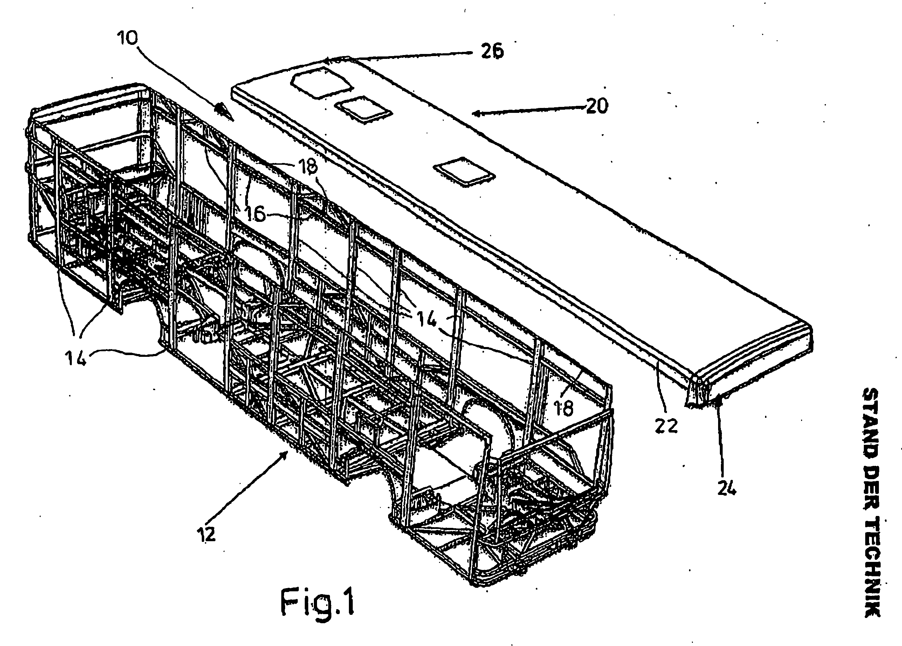

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Schrägsicht auf ein Grundgerippe eines Wagenkastens mit zugeordnetem Dachmodul nach dem Stand der Technik;
- Fig. 2:: den Querschnitt eines erfindungsgemäßen Verbindungsbereiches mit einem Verbindungsprofil zwischen Grundgerippe und Dachmodul;
- Fig. 3:: den gegenüber Fig. 2 vergrößerten Querschnitt des Verbindungsprofils;
- Fig. 4:: den Querschnitt eines dem Verbindungsprofil gemäß Fig. 2 zugeordneten Hohlprofils;
- Fig. 5:: eine skizzenhaft vereinfachte Darstellung des Querschnitts der Fig. 2;
- Fig. 6, 7:: zwei entsprechend Fig. 5 skizzenhafte Darstellungen zu Querschnitten weiterer Ausführungsbeispiele.

Das Grundgerippe 12 für einen Autobus 10 besteht nach dem Stande der Technik beispielsweise aus miteinander verschweißten oder verschraubten Stahl- oder Leichtmetallprofilen; vertikale Vierkantprofile 14 sind hier durch horizontale Seitenwandprofile 16 und firstwärtige Stabprofile 18 verbunden.

Beim Zusammenbau des Grundgerippes 12 sowie eines beispielsweise aus Aluminiumteilen zusammengefügten Dachelementes 20 werden des letzteren Randprofile 22, die sich zwischen einer Frontdachkappe 24 und einer Heckdachkappe 26 erstrecken, jeweils auf -- an einer Längsseite des Grundgerippes 12 miteinander fluchtendeStabprofile 18 aufgesetzt und dann diese beiden Komponenten 12, 20 miteinander fest verbunden.

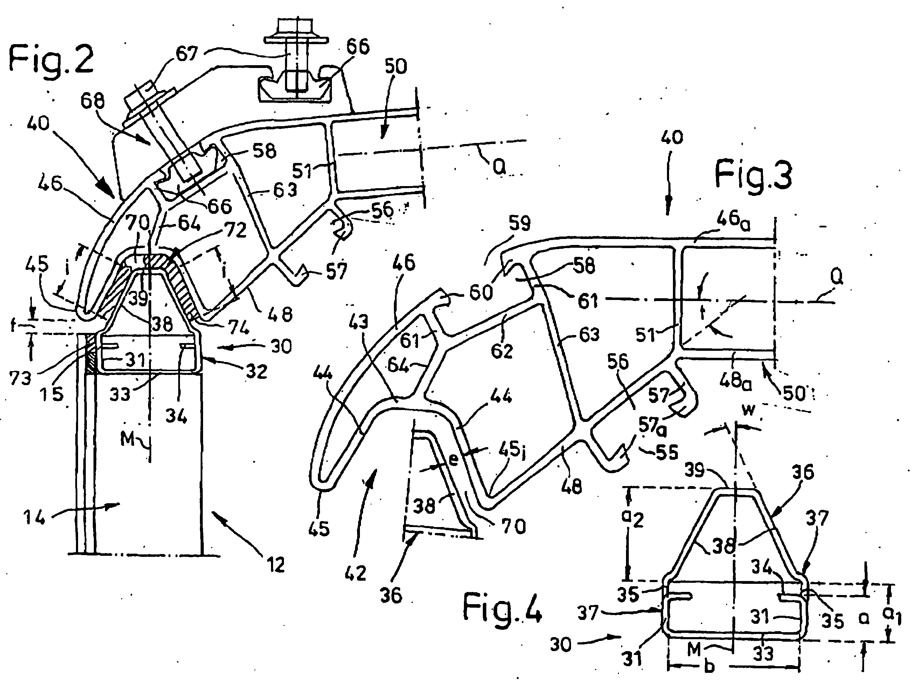

Erfindungsgemäß erfolgt der Anschluss des Moduldaches 20 an das Grundgerippe 12 mittels eines Längsprofils 40, das in Fig. 2, 3 deutlich dargestellt ist.

Die vertikalen Profile 14 einer Längsseite des Fahrzeugs 10 tragen hier ein ihre Firstbereiche verbindendesbeispielsweise auch aus Stahl einteilig rollgeformtesHohlprofil 30 als Dachgurt, der aus einem Sockel 32 rechteckigen Rinnenquerschnitts der Höhe a von etwa 15 mm sowie der inneren Breite b von 44 mm und einem Dachabschnitt 36 haubenartigen bzw. etwa kegelförmigen Querschnittes besteht; an zwei parallele Flankenwände 31 des Sockels 32, die endwärts mit zum Profilboden 33 des Dachgurtes 30 etwa parallelen sowie miteinander fluchtenden Kragabschnitten 34 versehen sind, schließt jeweils einmit der Flankenwand 31 fluchtender -- Fußstreifen 35 an, der unter Bildung einer schmalen Stufenkante 37 einer Flankenfläche 38 benachbart ist. Deren vertikaler Abstand a₁ vom Profilboden 33 misst hier etwa 19 mm.

Die beiden Flankenflächen 38 sind in einem Winkel w von etwa 34° zur senkrechten Mittelachse M des Hohlprofils 30 geneigt und gehen in einem vertikalen Abstand a₂ von etwa 30 mm von der jene Mittelachse M querenden Konstruktionsebene für die Stufen jener Stufenkanten 37 in eine zum Profilboden 33 parallele Firstfläche 39 über. Letztere bildet mit den angeformten Flankenflächen 38 sowie jenen Stufenkanten 37 ein sattelähnliches Auflageprofil für das erwähnte Längsprofil als Anschlussprofil 40.

Wie Fig. 2 deutlich werden lässt, weist das aus einer Aluminiumlegierung stranggepresste Anschluss- oder Längsprofil 40 an seinem unteren Querschnittsende eine Rinne 42 auf; die Form des Querschnittes von deren Rinnenwandfläche 44 entspricht dem Querschnitt des oben beschriebenen sattelähnlichen Auflagebereiches 37 bis 39 des Dachgurtes 30. Letzterer wird in diese Rinne 42 eingeführt, verbleibt aber zu ihr in Abstand; beide Flächen 38/39 und 44 begrenzen einen Spalt 70 jenes Abstandes als Spaltbreite e von etwa 6 mm. Des besseren Überblickes halber wurde dazu ein Abschnitt jenes Auflagebereiches in Fig. 3 skizziert.

Von den querschnittlich gebogenen beiden Endbereichen 45 bzw. 45i der Rinnenwand 44 geht ein teilkreisförmig angeformter Querschnittsabschnitt einer Profilaußenwand 46 bzw. eine querschnittlich gerade Profilinnenwand 48 aus, welche mit der Mittelachse Q eines Anschlussabschnitts 50 nahezu quadratischen Querschnittes einen Winkel t von etwa 40° einschließt.

Parallel zur Stirnwand 52 des Anschlussabschnitts 50 ist an beide Profilwände 46, 48 des Anschlussprofils 40 innenseitig eine Innenwand 51 angeformt, an welcher der teilkreisförmig gebogene Abschnitt der Profilaußenwand 46 in einen geraden Wandabschnitt 46a übergeht und eine Seitenwand jenes Anschlussabschnitts 50 bildet sowie dem hier parallelen Endbereich 48a der Profilinnenwand 48 als weitere Seitenwand gegenüberliegt. Letztere geht an der Innenwand 51 in die von jenem Winkel t bestimmte Neigungsrichtung über.

An der Profilinnenwand 48 ist vor deren Übergang in jenen Endbereich eine außen liegende Einsatznut 56 angeordnet, die von zwei von der Außenfläche der Profilinnenwand 48 abragenden Formrippen 57 jeweils L-förmigen Querschnitts begrenzt ist und zwischen deren Rippenköpfen 57a ein Längsspalt 55 verläuft.

Seitlich versetzt zu der Einsatznut 56 der Profilinnenwand 48 ist auch in der Profilaußenwand 46 des Anschlussprofils 40 eine Einsatznut 58 zu erkennen, die etwa im Querschnittszenit des gebogenen Wandbereiches der Profilaußenwand 46 durch einen Wandschlitz 59, diesen begrenzende Wandleiste 60 sowie von diesen ausgehende Nutseitenwänden 61, die mit einer zu den Wandleisten 60 parallelen Innenwand 62 verbunden sind, definiert ist. Diese ist an eine Querwand 63 des Anschlussprofils 40 und einen Innensteg 64 angeformt, welch letzterer andererseits an die Außenfläche des gekrümmten Rinnenbodens 43 der Rinne 42 angefügt ist.

Dargestellt ist in Fig. 2 beispielhaft, dass die Einsatznut 58 der Profilaußenwand 46 ein Halteprofil 66 für Befestigungsschrauben 67 aufnimmt; diese klemmen ein Längsprofil 68 an der Außenfläche der Profilaußenwand 46 fest.

Der vom Dachgurt 30 sowie dem Anschlussprofil 40 begrenzte Spalt 70 nimmt gemäß Fig. 2 eine Klebeverbindung auf, die im Spalt 70 einen querschnittlich rinnenförmigen Klebekörper 72 mit einer beidseitigen Schenkellänge i der Körperschenkel 74 von hier 12 mm bildet. Bei der Klebeverbindung handelt es sich um einen Ein- oder Zwei-Komponentenkleber, bevorzugt auf Polyurethanbasis.

Durch jenen Klebekörper 72 wird im Übrigen der Abstand f zwischen dem Endbereich 45 des Anschlussprofils 40 und einem Fixierschenkel 15 am vertikalen Vierkantprofil 14 bzw. an einem Klebeabschnitt 73 zwischen dem Fixierschenkel 15 und dem angrenzenden Sockel 32 des Dachgurtes 30 bei beispielsweise 5 bis 6 mm festgelegt.

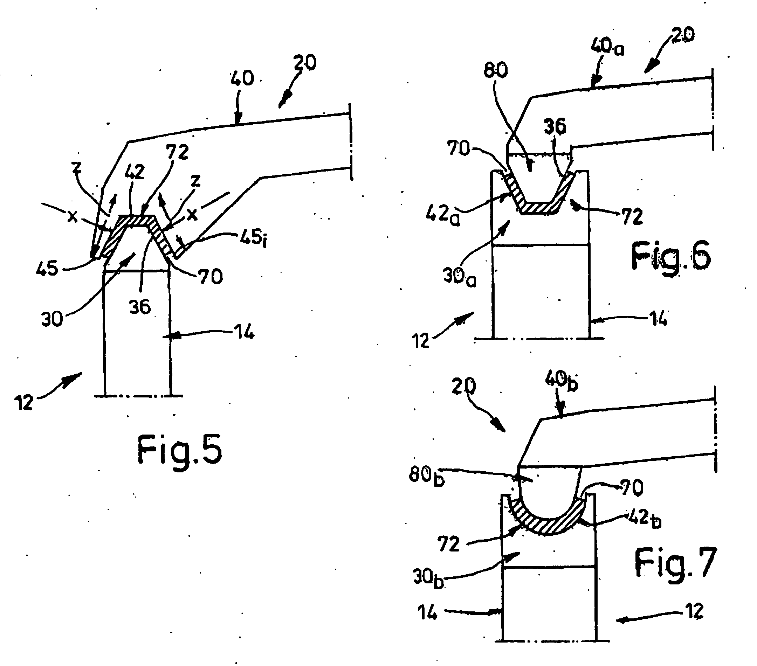

Die skizzenhafte Fig. 5 soll an der verklebten Verbindung aus -- den Dachabschnitt 36 aufweisenden -- Dachgurt 30 und Anschlussprofil 40 die angreifenden Druckkräfte (Pfeil x) sowie die Zugscherkräfte (Pfeil z) deutlich werden lassen.

Fig. 6 zeigt einen Austausch der Formgebung: hier steht nämlich einem gerippeseitigen Hohlprofil 30ₐ mit einer Rinne 42ₐ ein Einsatzprofil 80 des Anschlussprofils 40ₐ des Dachelementes oder Moduldaches 20 gegenüber; beide begrenzen auch hier den querschnittlich hut- oder haubenartigen -- also eckigen -- Spalt 70 für den Klebekörper 72. Dass die querschnittliche Kontur einer Rinne 42_{b} im Hohlprofil 30_{b} auch teilkreisförmig sein kann, ebenso die entsprechende Gegenkontur am Einsatzprofil 80_{b} des Moduldaches 20, ist Fig. 7 ergänzend zu entnehmen,.

## Patentansprüche

1. Fahrzeuggestell, insbesondere Gestell für einen Autobus, mit einem Grundgerippe (12) aus Metall sowie einem auf diesem festliegenden Dachelement (20) aus einem anderen Werkstoff, wobei die beiden Komponenten (12, 20) durch Klebeverbindungen aneinander angeschlossen sind, wobei eine Komponente (12 bzw. 20) mit einem hervorstehenden Formelement (30 bzw. 80, 80b) in eine entsprechend geformte rinnen- oder nutartige Einformung (42 bzw. 42ₐ, 42_{b}) der anderen Komponente (20 bzw. 12) eingreift und zwischen diesen Teilen ein spaltartiger Raum (70) gebildet ist, der eine entsprechend geformte Schicht als Klebekörper (72) aus der Klebeverbindung enthält.
**dadurch gekennzeichnet,**
**dass**
das hervorstehende Formelement ein auf dem Grundgerippe (12) angeordneter Dachgurt (30) mit einem Dachabschnitt (36) hauben- oder kegelartigen Querschnittes ist, der in Einbaustellung in eine Rinne (42) eines Anschlussprofils (40) des Dachelements (20) einragt, wobei die Wandflächen (36) jenes Dachabschnitts sowie die die Rinne bildenden Wandflächen (43, 44) die gleiche Querschnittsform aufweisen und den Spalt (70) zur Aufnahme des Klebekörpers (72) begrenzen,
oder,
**dass** das hervorstehende Formelement ein einem Anschlussprofil (40ₐ) des Dachelements (20) zugeordnetes Einsatzprofil (80) mit einem Dachabschnitt (36) hauben- oder kegelartigen Querschnitts ist, der in Einbaustellung in eine Rinne (42ₐ) eines auf dem Grundgerippe (12) angeordneten Dachgurtes (30ₐ) einragt, wobei die Wandflächen jenes Dachabschnitts (36) mit den die Rinne begrenzenden Wandflächen den Spalt (70) zur Aufnahme des Klebekörpers (72) bilden und dass die Wandflächen des Dachabschnittes und die die Rinne begrenzenden Wandflächen die gleiche Querschnittsform aufweisen.

2. Fahrzeuggestell nach Anspruch 1, **gekennzeichnet durch** eine eckige Querschnittskontur des Spaltes (70).

3. Fahrzeuggestell nach Anspruch 1, **dadurch gekennzeichnet, dass** die Querschnittskontur des Spaltes (70) teilkreisförmig gestaltet ist.

4. Fahrzeuggestell nach einem der Ansprüche 1 bis 3, **dadurch gekennzeichnet, dass** der Klebekörper (72) aus einem Ein- oder Zwei-Komponentenkleber besteht, bevorzugt auf Polyurethanbasis.

## Claims

1. Vehicle chassis, In particular a chassis for a bus, comprising a base frame (12) made of metal and a roof element fixed thereon (20) made of a different material, the two components (12, 20) being interconnected by means of adhesive joints, one component (12 or 20) engaging, together with a protruding shaped element (30 or 80, 80b), in a correspondingly shaped channel-like or groove-like cavity (42 or 42a, 42b) of the other component (20 or 12) and a gap-like space (70) being formed between these parts which contains a correspondingly shaped layer as an adhesive body (72) from the adhesive joint, **characterised in that** the protruding shaped element Is a roof flange (30), arranged on the base frame (12), comprising a roof portion (36) having a hood-like or cone-like cross-section which projects in the mounting position into a channel (42) of a connecting profile (40) of the roof element (20), the wall faces (36) of each roof portion and the wall faces (43, 44) that form the channel having the same cross-sectional shape and delimiting the gap (70) for receiving the adhesive body (72), or **In that** the protruding shaped element is an insertion profile (80) assigned to a connecting profile (40a) of the roof element (20) and comprising a roof portion (36) having a hood-like or cone-like cross-section which projects in the mounting position Into a channel (42a) of a roof flange (30a) arranged on the base frame (12), the wall faces of each roof portion (36), together with the faces delimiting the channel, forming the gap (7) for receiving the adhesive body (72), and **In that** the wall faces of the roof portion and the wall faces delimiting the channel have the same cross-sectional shape.

2. Vehicle chassis according to claim 1, **characterised in that** the gap (70) has an angular cross-sectional contour.

3. Vehicle chassis according to claim 1, **characterised in that** the cross-sectional contour of the gap (70) is configured in the shape of a graduated circle.

4. Vehicle chassis according to any of claims 1 to 3, **characterised In that** the adhesive body (72) consists of a one- or two-component adhesive, preferably a polyurethane-based adhesive.

## Revendications

1. Châssis de structure de véhicule, notamment châssis de structure pour un autobus, comprenant une ossature de base (12) en métal ainsi qu'un élément de toit (20) y reposant de manière fixe et réalisé en un autre matériau, châssis de structure dans lequel les deux composants (12, 20) sont raccordés mutuellement par des liaisons de collage, et dans lequel un composant (12 respectivement 20) s'engage, avec un élément de forme en saillie (30 respectivement 80, 80_{b}), dans un creux de forme (42 respectivement 42ₐ, 42_{b}) présentant une forme correspondante en rainure ou en goulotte, de l'autre composant (20 respectivement 12), et entre ces parties est formé un espace (70) en forme d'interstice, qui renferme une couche de forme correspondante en tant que corps de collage (72) de la liaison de collage,
**caractérisé**
**en ce que** l'élément de forme en saillie est une ceinture de toit (30) agencée sur l'ossature de base (12) et comprenant un tronçon de toit (36) d'une section transversale de forme conique ou en forme de calotte, qui, dans la position d'implantation, s'engage dans une goulotte (42) d'un profilé de raccordement (40) de l'élément de toit (20), les surfaces de paroi (36) dudit tronçon de toit, ainsi que les surfaces de paroi (43, 44), qui forment la goulotte, présentant la même forme de section transversale et délimitant l'interstice (70) destiné à recevoir le corps de collage (72),
ou
**en ce que** l'élément de forme en saillie est un profilé d'insert (80) associé à un profilé de raccordement (40ₐ) de l'élément de toit (20) et comprenant un tronçon de toit (36) d'une section transversale de forme conique ou en forme de calotte, qui, dans la position d'implantation, s'engage dans une goulotte (42ₐ) d'une ceinture de toit (30ₐ) agencée sur l'ossature de base (12), les surfaces de paroi dudit tronçon de toit (36) formant, avec les surfaces de paroi délimitant la goulotte, l'interstice (70) destiné à recevoir le corps de collage (72), et en ce que les surfaces de paroi du tronçon de toit et les surfaces de paroi délimitant la goulotte présentent la même forme de section transversale.

2. Châssis de structure de véhicule selon la revendication 1, **caractérisé par** un contour de section transversale polygonal de l'interstice (70).

3. Châssis de structure de véhicule selon la revendication 1, **caractérisé en ce que** le contour de section transversale de l'interstice (70) est d'une configuration de forme circulaire partielle.

4. Châssis de structure de véhicule selon l'une des revendications 1 à 3, **caractérisé en ce que** le corps de collage (72) est réalisé en une colle à un ou deux composants, de préférence à base de polyuréthanne.
